# EUROPÄISCHE PATENTSCHRIFT

(11) **EP 2 217 633 B1**
(45) Veröffentlichungstag und Bekanntmachung des Hinweises auf die Patenterteilung: **01.08.2012**
(21) Anmeldenummer: 08856024.8
(22) Anmeldetag: 02.12.2008
(51) Int. Cl.: C08G 18/10, C08G 18/48, C08G 18/76, C08G 18/71, C08G 18/28, C09J 175/04, C08G 18/12

(54) **HÄRTBARE ZUSAMMENSETZUNGEN ENTHALTEND SILYLIERTE POLYURETHANE**
CURABLE COMPOUND COMPRISING SILYLATED POLYURETHANE
COMPOSITIONS DURCISSABLES CONTENANT DES POLYURÉTHANNES SILYLÉS

(30) Priorität: 04.12.2007 DE 102007058483
(43) Veröffentlichungstag der Anmeldung: 18.08.2010
(73) Patentinhaber: Henkel AG & Co. KGaA, 40589 Düsseldorf (DE)
(72) Erfinder: BRAUN, Daniela, Shanghai 200120 (CN); KLEIN, Johann, 40593 Düsseldorf (DE); KUNZE, Christiane, 51061 Köln (DE); GONZALEZ, Sara, E-08172 Sant Cugat (ES); ZANDER, Lars, 41569 Rommerskirchen (DE); BOLTE, Andreas, 40627 Düsseldorf (DE); BOUDET, Helene, 40227 Düsseldorf (DE); SCHULZ, Sarah, 42489 Wülfrath (DE)
(86) Internationale Anmeldenummer: PCT/EP2008/066630
(87) Internationale Veröffentlichungsnummer: WO 2009/071542

(56) Entgegenhaltungen:
- EP-A- 0 931 800
- WO-A-2007/050426
- WO-A-2008/027499
- WO-A-2008/036364

## Beschreibung

Die vorliegende Erfindung betrifft silanvernetzende, härtbare Zusammensetzungen, deren Herstellung und Verwendung in Kleb- und Dichtstoffen.

Polymersysteme, die über reaktive Alkoxysilylgruppen verfügen, sind bekannt. In Gegenwart von Luftfeuchtigkeit sind diese alkoxysilanterminierten Polymere bereits bei Raumtemperatur in der Lage, unter Abspaltung der Alkoxygruppen miteinander zu kondensieren. Je nach Gehalt an Alkoxysilylgruppen und deren Aufbau bilden sich dabei hauptsächlich langkettige Polymere (Thermoplaste), relativ weitmaschige dreidimensionale Netzwerke (Elastomere) oder hochvernetzte Systeme (Duroplaste).

Die Polymere weisen in der Regel ein organisches Grundgerüst auf, das an den Enden Alkoxysilylgruppen trägt. Bei dem organischen Grundgerüst kann es sich beispielsweise um Polyurethane, Polyester, Polyether etc. handeln.

Einkomponentige, feuchtigkeitshärtende Kleb- und Dichtstoffe spielen seit Jahren eine bedeutende Rolle bei zahlreichen technischen Anwendungen. Neben den Polyurethan-Kleb- und Dichtstoffen mit freien Isocyanatgruppen und den traditionellen Silikon- Kleb- und Dichtstoffen auf der Basis von Dimethylpolysiloxanen sind in letzter Zeit auch verstärkt die so genannten modifizierten Silan-Kleb- und Dichtstoffe eingesetzt worden. Bei der letztgenannten Gruppe ist der Hauptbestandteil des Polymerrückgrates ein Polyether und die reaktiven und vernetzungsfähigen Endgruppen sind Alkoxysilylgruppen. Gegenüber den Polyurethan-Kleb- und Dichtstoffen weisen die modifizierten Silan-Kleb- und Dichtstoffe den Vorteil der Freiheit von Isocyanatgruppen, insbesondere von monomeren Diisocyanaten auf, weiterhin zeichnen sie sich durch ein breites Haftspektrum auf einer Vielzahl von Substraten ohne Oberflächenvorbehandlung durch Primer aus.

US 4,222,925 A und US 3,979,344 A beschreiben bereits bei Raumtemperatur härtbare siloxanterminierte organische Dichtstoffzusammensetzungen auf der Basis von Umsetzungsprodukten von Isocyanat-terminierten Polyurethan-Prepolymeren mit 3-Aminopropyltrimethoxysilan beziehungsweise 2-Aminoethyl-, 3-Aminopropylmethoxysilan zu isocyanatfreien siloxanterminierten Prepolymeren. Kleb- und Dichtstoffe auf der Basis dieser Prepolymeren weisen jedoch unbefriedigende mechanische Eigenschaften, insbesondere in Bezug auf ihre Dehnung und Reißfestigkeit auf.

Für die Herstellung von silanterminierten Prepolymeren auf der Basis von Polyethern sind die nachfolgend aufgeführten Verfahren bereits beschrieben worden:
- Copolymerisation von ungesättigten Monomeren mit solchen die Alkoxysilylgruppen aufweisen, wie z.B. Vinyltrimethoxysilan.
- Aufpfropfung von ungesättigten Monomeren wie Vinyltrimethoxysilan auf Thermoplaste wie Polyethylen.
- Hydroxyfunktionelle Polyether werden mit ungesättigten Chlorverbindungen, z.B. Allylchlorid, in einer Ethersynthese in Polyether mit endständigen olefinischen Doppelbindungen umgesetzt, die ihrerseits mit Hydrosilanverbindungen, die hydrolysierbare Gruppen haben, wie z.B. HSi(OCH₃)₃ in einer Hydrosilylierungsreaktion unter dem katalytischen Einfluss von beispielsweise Übergangsmetallverbindungen der 8. Gruppe zu silanterminierten Polyethern umgesetzt werden.
- In einem anderen Verfahren werden die olefinisch ungesättigte Gruppen enthaltenden Polyether mit einem Mercaptosilan wie z.B. 3-Mercaptopropyltrialkoxysilan umgesetzt.
- Bei einem weiteren Verfahren werden zunächst Hydroxylgruppen-haltige Polyether mit Di- oder Polyisocyanaten umgesetzt, die dann ihrerseits mit aminofunktionellen Silanen oder mercaptofunktionellen Silanen zu silanterminierten Prepolymeren umgesetzt werden.
- Eine weitere Möglichkeit sieht die Umsetzung von hydroxyfunktionellen Polyethern mit isocyanatofunktionellen Silanen wie z.B. 3-Isocyanatopropyltrimethoxysilan vor.

Diese Herstellverfahren und die Verwendung der oben genannten silanterminierten Prepolymeren in Kleb-/Dichtstoffanwendungen sind beispielsweise in den folgenden Patentschriften genannt: US-A-3971751, EP-A-70475, DE-A-19849817, US-A-6124387 US-A-5990257 US-A-4960844, US-A-3979344, US-A-3632557, DE-A-4029504, EP-A-601021, oder EP-A-370464.

EP-A-0931800 beschreibt die Herstellung von silylierten Polyurethanen durch Umsetzung einer Polyolkomponente mit einer endständigen Ungesättigtheit von weniger als 0,02 meq/g mit einem Diisocyanat zu einem Hydroxyl-terminierten Prepolymer, das anschließend mit einem Isocyanatosilan der Formel OCN-R-Si-(X)ₘ(-OR¹)₃₋ₘ wobei m 0,1 oder 2 ist und jeder R¹-Rest eine Alkylgruppe mit 1 bis 4 C-Atomen und R eine difunktionelle organische Gruppe ist. Gemäß der Lehre dieser Schrift wiesen derartige silylierte Polyurethane eine überlegene Kombination aus mechanischen Eigenschaften auf, die in vernünftigen Zeiträumen zu einen wenig klebrigen Dichtstoff aushärten, ohne eine übermäßige Viskosität aufzuweisen.

WO-A-2003 066701 offenbart Alkoxysilan- und OH-Endgruppen aufweisende Polyurethanprepolymere auf Basis von hochmolekularen Polyurethanprepolymeren mit erniedrigter Funktionalität zur Verwendung als Bindemittel für niedermodulige Dichtstoffe und Klebstoffe. Dazu soll zunächst ein Polyurethanprepolymer aus einer Diisocyanatkomponente mit einem NCO-Gehalt von 20 bis 60% und einer Polyolkomponente, umfassend ein Polyoxyalkylendiol mit einem Molekulargewicht zwischen 3000 und 20000 als Hauptkomponente, umgesetzt werden, wobei die Umsetzung bei einem Umsatz von 50 bis 90% der OH-Gruppen gestoppt werden soll. Diese Reaktionsprodukt soll anschließend mit einer Alkoxysilan- und Aminogruppen aufweisenden Verbindung weiter umgesetzt werden. Durch diese Maßnahmen sollen Prepolymere mit verhältnismäßig geringer mittlerer Molekülmasse und niedriger Viskosität erhalten werden, die die Erreichung ein hohen Eigenschaftsniveaus gewährleisten sollen.

Aus WO-A-2005 042605 sind feuchtigkeitshärtende Alkoxysilan-funktionelle Polyetherurethan-Zusammensetzungen bekannt, die 20 bis 90 Gew.% eines Polyetherurethans A mit zwei oder mehr reaktiven Silangruppen und 10 bis 80 Gew.% eines Polyetherurethans B mit einer reaktiven Silangruppe enthalten. Das Polyetherurethan A soll dabei Polyethersegmente mit einem zahlenmittleren Molekulargewicht (Mₙ) von mindestens 3000 und einer Ungesättigtheit von weniger als 0,04 mequ/g aufweisen, und die reaktiven Silangruppen sollen durch Reaktion einer isocyanatreaktiven Gruppe mit einer Verbindung der Formel OCN-Y-Si-(X)₃ eingefügt werden. Das Polyetherurethan B soll ein oder mehrere Polyethersegmente mit einem zahlenmittleren Molekulargewicht (Mₙ) von 1000 bis 15000 aufweisen und die reaktiven Silangruppen sollen durch Reaktion einer Isocyanatgruppe mit einer Verbindung der Formel HN(R₁)-Y-Si-(X)₃ eingefügt werden. R₁ ist dabei eine Alkyl-, Cycloalkyl- oder aromatische Gruppe mit 1 bis 12 C-Atomen, X eine Alkoxygruppe und Y ein lineares Radikal mit 2 bis 4 C-Atomen oder ein verzweigtes Radikal mit 5 bis 6 C-Atomen.

Zur Reduzierung der Funktionalität und damit der Vernetzungsdichte von feuchtigkeitshärtenden alkoxysilanterminierten Polyurethanen schlägt WO-A-92/05212 die Mitverwendung von monofunktionellen Isocyanaten im Gemisch mit Diisocyanaten bei der Synthese vor. Monoisocyanate haben bekanntlich einen sehr hohen Dampfdruck und sind wegen ihrer Toxizität in arbeitshygienischer Sicht bedenkliche Einsatzstoffe.

Es besteht weiterhin das Bedürfnis nach isocyanatfreien Zusammensetzungen zur Herstellung von 1 K- oder 2K- Kleb- und Dichtstoffen, die eine akzeptable Härtungszeit und nach Aushärtung eine besonders gute Elastizität und Dehnbarkeit aufweisen. Ferner besteht der Wunsch, nach einer effizienten Syntheseroute und nach Zusammensetzungen, die keine Restklebrigkeit aufweisen.

Aufgabe der vorliegenden Erfindung ist daher, isocyanatfreie vernetzbare Zusammensetzungen bereitzustellen, die eine hohe Elastizität und eine gute Dehnbarkeit aufweisen. Ferner ist eine anwenderfreundliche Härtungszeit erwünscht.

Die erfindungsgemäße Lösung der Aufgabe ist den Patentansprüchen zu entnehmen.
Sie besteht im Wesentlichen in der Bereitstellung eines Verfahrens zur Herstellung eines silylierten Polyurethans, umfassend:
(A) Umsetzen
   (i) mindestens einer Polyolverbindung mit einem Molekulargewicht von 4 000 - 30 000 Dalton bzw. g/mol und mindestens einer gegenüber Isocyanaten monofunktionellen Verbindung mit
   (ii) mindestens einem Diisocyanat bei einem stöchiometrischen Überschuss der Summe aus Polyolverbindung(en) und monofunktioneller Verbindung gegenüber der / den Diisocyanatverbindung(en), wodurch ein Polyurethan-Prepolymer gebildet wird, das Hydroxyl-terminiert ist; und
(B) Umsetzen des Polyurethan-Prepolymers mit einem oder mehreren Isocyanatosilan(en) der Formel (I):

   OCN-R-Si-(R¹)ₘ(-OR²)₃₋ₘ (I)

   worin m 0, 1 oder 2 ist, jedes R² ein Alkylrest mit 1 bis 4 Kohlenstoffatomen ist, jedes R¹ ein Alkylrest mit 1 bis 4 Kohlenstoffatomen ist und R eine difunktionelle organische Gruppe ist.

Das Umsetzen des Polyurethan-Prepolymers mit einem oder mehreren Isocyanatosilanen der Formel (I) gemäß (B) geschieht, um die Hydroxylgruppen des Prepolymers mit dem Isocyanatosilan zu verkappen bzw. die Silylterminierung einzuführen.

Ein weiterer Gegenstand der vorliegenden Erfindung ist ein silyliertes Polyurethan herstellbar nach dem oben beschriebenen erfindungsgemäßen Verfahren zur Herstellung eines silylierten Polyurethans. Die Erfindung betrifft daher auch ein silyliertes Polyurethan, das hergestellt wird durch Umsetzen mindestens einer Polyolverbindung mit einem Molekulargewicht von 4000 bis 30000 g/mol und mindestens einer gegenüber Isocyanaten monofunktionellen Verbindung mit mindestens einem Diisocyanat bei einem stöchiometrischen Überschuss der Summe aus der Polyolverbindung oder der Polyolverbindungen und der monofunktionellen Verbindung gegenüber der Diisocyanatverbindung(en). Durch diese Umsetzung entsteht ein Polyurethan-Prepolymer, das mit Hydroxylgruppen terminiert ist. Nachfolgend wird dieses Hydroxylterminierte Polyurethan-Prepolymer mit einem oder mehreren Isocyanatosilanen der Formel (I)

OCN-R-Si-(R¹)ₘ(-OR²)₃₋ₘ (I)

umgesetzt, wodurch die Hydroxylgruppen des Prepolymers mit dem Isocyanatosilan verkappt werden bzw. die Silylterminierung eingeführt wird, so dass ein Polyurethan-Prepolymer mit endständigen Alkoxysilylgruppen entsteht. In der Formel (I) ist m eine ganze Zahl zwischen 0 und 2, R¹ ist ein Alkylrest mit 1 bis 4 Kohlenstoffatomen, R² ist ebenfalls ein Alkylrest mit 1 bis 4 Kohlenstoffatomen und R stellt eine difunktionelle organische Gruppe dar, die vorzugsweise eine Alkylengruppe mit 1 bis 4 Kohlenstoffatomen sein kann.

Ein weiterer Gegenstand der vorliegenden Erfindung ist eine feuchtigkeitshärtende Kleb-, Dichtstoff- oder Beschichtungsmittel- Zubereitung und deren Verwendung, die ein oder mehrere silylierte Polyurethan(e) der vorgenannten Art bzw. hergestellt nach dem vorgenannten Verfahren enthält. Zusätzlich zu den erfindungsgemäßen silylierten Polyurethan(en) kann diese Zubereitung noch weitere Inhaltsstoffe, wie z.B. Weichmacher, Füllstoffe, Katalysatoren und weitere Hilfs- und Zusatzstoffe enthalten.

Als Polyolverbindungen bzw. Polyole können prinzipiell eine Vielzahl von mindestens zwei Hydroxylgruppen-tragenden Polymeren eingesetzt werden, beispielhaft genannt seien Polyester, Polyole, Hydroxylgruppen-haltige Polycaprolactone, Hydroxylgruppen-haltige Polybutadiene oder Polyisoprene sowie deren Hydrierungsprodukte oder auch Hydroxylgruppen-haltige Polyacrylate oder Polymethacrylate. Es können auch Mischungen verschiedener Polyolverbindungen verwendet werden.

Ganz besonders bevorzugt werden jedoch als Polyole Polyoxyalkylene, insbesondere Polyethylenoxide und/oder Polypropylenoxide, eingesetzt.

Polyole, die Polyether als Polymergerüst enthalten, besitzen nicht nur an den Endgruppen, sondern auch im Polymerrückgrat eine flexible und elastische Struktur. Damit kann man Zusammensetzungen herstellen, die nochmals verbesserte elastische Eigenschaften aufweisen. Dabei sind Polyether nicht nur in ihrem Grundgerüst flexibel, sondern gleichzeitig beständig. So werden Polyether beispielsweise von Wasser und Bakterien, im Gegensatz zu beispielsweise Polyestern, nicht angegriffen oder zersetzt.

Besonders bevorzugt werden daher Polyethylenoxide und/oder Polypropylenoxide eingesetzt.

Das Molekulargewicht Mₙ des Polymergerüsts der Polyolverbindungen liegt zwischen 4000 und 30000 g/mol (Dalton). Nach einer bevorzugten Ausführungsform der Erfindung beträgt das Molekulargewicht Mₙ der Polyolverbindung zwischen 5000 und 25000 g/mol. Weitere besonders bevorzugte Molekulargewichtsbereiche sind 8000 bis 20000 g/mol, ganz besonders bevorzugt sind 12000 bis 19000 bzw. 15000 bis 18000 g/mol.

Diese Molekulargewichte sind besonders vorteilhaft, da Zusammensetzungen, die unter Verwendung von Polyolverbindungen mit diesen Molekulargewichten hergestellt wurden, Viskositäten aufweisen, die eine leichte Verarbeitbarkeit ermöglichen.

Nach einer bevorzugten Ausführungsform des erfindungsgemäßen Verfahrens wird eine Polyolverbindung eingesetzt, insbesondere ein Polyoxyalkylen, insbesondere Polyethylenoxid und/oder Polypropylenoxid.

Ganz besonders bevorzugt werden Polyoxyalkylene, insbesondere Polyethylenoxide oder Polypropylenoxide, eingesetzt, die eine Polydispersität PD von weniger als 2, bevorzugt weniger als 1,5, insbesondere weniger als 1,3, aufweisen.

Unter dem Molekulargewicht Mₙ wird das zahlenmittlere Molekulargewicht des Polymeren verstanden. Dieses kann, ebenso wie das gewichtsmittlere Molekulargewicht M_{w}, durch Gelpermeationschromatographie (GPC, auch: SEC) bestimmt werden. Dieses Verfahren ist dem Fachmann bekannt. Die Polydispersität leitet sich aus den mittleren Molekulargewichten M_{w} und Mₙ ab. Sie wird berechnet als PD = M_{w}/ Mₙ.

Besonders vorteilhafte viskoelastische Eigenschaften lassen sich erreichen, wenn man als polymere Grundgerüste Polyoxyalkylenpolymere, welche eine enge Molmassenverteilung und damit niedrige Polydispersität besitzen, einsetzt. Diese sind beispielsweise durch die so genannte Double-Metal-Cyanide-Katalyse (DMC-Katalyse) herstellbar. Diese Polyoxyalkylenpolymere zeichnen sich in der Regel durch eine besonders enge Molmassenverteilung, durch eine hohe mittlere Molmasse und durch eine sehr niedrige Zahl an Doppelbindungen an den Enden der Polymerketten aus.

Solche Polyoxyalkylenpolymere haben eine Polydispersität PD (M_{w}/Mₙ) von höchstens 1,7.

Besonders bevorzugte organische Grundgerüste sind beispielsweise Polyether mit einer Polydispersität von etwa 1,01 bis etwa 1,3, insbesondere etwa 1,05 bis etwa 1,18, beispielsweise etwa 1,08 bis etwa 1,11 oder etwa 1,12 bis etwa 1,14.

In einer bevorzugten Ausführungsform der Erfindung weisen diese Polyether ein mittleres Molekulargewicht (Mₙ) von etwa 5 000 bis etwa 30 000 g/mol auf, insbesondere etwa 6000 bis etwa 25 000 g/mol. Besonders bevorzugt sind Polyether mit mittleren Molekulargewichten von etwa 10 000 bis etwa 22 000 g/mol, insbesondere mit mittleren Molekulargewichten von etwa 12 000 bis etwa 18 000 oder 15 000 bis 18 000 g/mol.

Als Diisocyanate zur Herstellung des Hydroxyl-terminierten Polyurethan-Prepolymers eignen sich beispielsweise Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3-und -1,4-diisocyanat, Bis(2-isocyanato-ethyl)fumarat, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3- oder -1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) sowie deren Isomerengemische. Weiterhin kommen partiell oder vollständig hydrierte Cycloalkylderivate des MDI, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate, 4,4'-Diisocyanatophenylperfluorethan, Phthalsäure-bis-isocyanatoethylester, 1-Chlormethylphenyl-2,4- oder -2,6-diisocyanat, 1-Brommethylphenyl-2,4- oder -2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Diisocyanate der Dimerfettsäuren, oder Gemische aus zwei oder mehr der genannten Diisocyanate, in Frage.

Nach einer bevorzugten Ausführungsform des erfindungsgemäßen Verfahrens wird die gegenüber Isocyanaten monofunktionelle Verbindung ausgewählt aus Monoalkoholen, Monomercaptanen, Monoaminen oder deren Mischungen.

Es wird gemäß Schritt (A) (i) eine Menge der Polyolmischung aus mindestens einer Polyolverbindung mit einem Molekulargewicht von 4 000 - 30 000 g/mol und einer gegenüber Isocyanaten monofunktionellen Verbindung verwendet, dass die Summe der Polyolverbindungen sowie der (gegenüber Isocyanaten) monofunktionellen Verbindung(en) im stöchiometrischen Überschuss gegenüber der bzw. den Diisocanatverbindung(en) verwendet wird. Das bedeutet, dass die Gesamtzahl der Hydroxylgruppen aus Polyolverbindung(en) sowie ggf. Monoalkohol und ggf. SH- bzw. Amingruppen aus Monomercaptanen bzw. Monoaminen im stöchiometrischen Überschuss gegenüber den Isocyanatgruppen der/des Diisocyanatverbindung(en) verwendet wird, d.h. höher als die Zahl der Isocyanatgruppen ist. Bevorzugt ist es allerdings, wenn ein so großer Überschuss verwendet wird, dass auch die Summe der Polyolverbindungen im stöchiometrischen Überschuss gegenüber der Isocyanatverbindung(en) verwendet wird. In diesem Fall ist die Gesamtzahl der Hydroxylgruppen aus den Polyolverbindungen im stöchiometrischen Überschuss gegenüber den Isocyanatgruppen der/des Diisocyanatverbindung(en), d.h. höher als die Zahl der Isocyanatgruppen. Besonders bevorzugt ist die Verwendung einer Polyolmischung bestehend aus einer oder mehrerer Polyolverbindung(en) und mindestens einer gegenüber Isocyanaten monofunktionellen Verbindung, bspw. einer Polyolmischung bestehend aus einer Polyolverbindung und einer gegenüber Isocyanaten monofunktionellen Verbindung.

Dadurch lässt sich die Funktionalität der resultierenden silylierten Polyurethane steuern, so dass beispielsweise ein bevorzugter Silylierungsgrad bzw. Silylterminierungsgrad von 1,5 bis kleiner als 2,0, insbesondere 1,6 bis 1,8 eingestellt werden kann.

Erfindungsgemäß sind als (gegenüber Isocyanaten) monofunktionelle Verbindungen solche Verbindungen geeignet, die gegenüber Isocyanaten reaktive Gruppen mit einer Funktionalität von 1 haben. Grundsätzlich sind hierfür alle monofunktionellen Alkohole (Monoalkohole), Amine (Monoamine) oder Mercaptane (Monomercaptane) verwendbar, dies sind insbesondere monofunktionelle Alkohole mit bis zu 36 Kohlenstoffatomen, monofunktionelle primäre und/oder sekundäre Amine mit bis zu 36 Kohlenstoffatomen oder monofunktionelle Mercaptane mit bis zu 36 Kohlenstoffatomen. Es können aber auch Mischungen von Polyalkoholen, Polyaminen und/oder Polymercaptanen als monofunktionelle Verbindungen verwendet werden, solange deren durchschnittliche Funktionalität deutlich unter 2 liegt.

Besonders bevorzugt sind zum Beispiel Monoalkohole wie Benzylalkohol, Methanol, Ethanol, die Isomeren des Propanols, Butanols und Hexanols, Monoether von Ethylenglykol und/oder Diethylenglykol, sowie die durch Reduktion von Fettsäuren erhältlichen primären Alkohole mit 8 bis 18 C-Atomen wie Octanol, Decanol, Dodecanol, Tetradecanol, Hexadecanol und Octadecanol, insbesondere in Form technischer Gemische derselben. Monoalkohole mit 4 bis 18 C-Atomen sind bevorzugt, da sich die niedrigen Alkohole nur schwer wasserfrei herstellen lassen.

Weiterhin einsetzbar sind Monoalkylpolyetheralkohole unterschiedlichen Molekulargewichts, wobei ein Zahlenmittel des Molekulargewichts zwischen 1000 und 2000 g/mol bevorzugt ist. Ein bevorzugter Vertreter ist z. B. Monobutylpropylenglykol.

Es können auch gesättigte Fettalkohole mit bis zu 26 Kohlenstoffatomen eingesetzt werden, vorzugsweise solche mit bis zu 22 Kohlenstoffatomen, die großtechnisch durch Reduktion (Hydrierung) von Fettsäuremethylestem synthetisiert werden. Beispielhaft genannt seien: Capronalkohol, Caprylalkohol, Pelargonalkohol, Caprinalkohol, Laurinalkohol, Myristinalkohol, Cetylalkohol, Stearylalkohol, Gadoleylalkohol und Behenylalkohol oder die Guerbetalkohole 2-Hexyldecanol, 2-Octyldodecanol, 2-Decyltetradecanol, 2-Dodecylhexadecanol, 2-Tetradecyloctadecanol, 2-Hexadecyleicosanol, Guerbetalkohol aus Erucylalkohol, Behenylalkohol und Ocenolen.

Gegebenfalls können Gemische, resultierend aus der Guerbetisierung technischen Fettalkohole, zusammen mit den anderen vorgenannten Alkoholen, verwendet werden.

Der Anteil der (gegenüber Isocyanaten) monofunktionellen Verbindung(en) beträgt 10 bis 40 Molprozent, bezogen auf die Polyolmischung enthaltend Polyolverbindung(en) und mindestens eine (gegenüber Isocyanaten) monofunktionelle Verbindung; besonders bevorzugt ist ein Anteil an monofunktioneller Verbindung(en) von 15 bis 30 Molprozent

Der stöchiometrische Überschuss der Summe aus Polyolverbindung oder Polyolverbindungen und monofunktioneller Verbindung gegenüber der eingesetzten Diisocyanatverbindung oder Mischung aus Diisocyanaten beträgt 1,1 bis 2,0, vorzugsweise liegt er zwischen 1,2 und 1,5. Hierdurch ist sichergestellt, dass das Umsetzungsprodukt der Stufe A ein Polyurethan-Prepolymer mit endständigen Hydroxylgruppen gebildet wird.

Für die nachfolgende Umsetzung des Hydroxyl-terminierten Polyurethan-Prepolymers mit einem oder mehreren Isocyanatosilanen bzw. isocyanatofunktionellen Alkoxysilanen der Formel (I) sind die nachfolgend aufgeführten Isocyanatosilane geeignet:
Methyldimethoxysilylmethylisocyanat, Ethyldimethoxysilylmethylisocyanat, Methyldiethoxysilylmethylisocyanat, Ethyldiethoxysilylmethylisocyanat, Methyldimethoxysilylethylisocyanat, Ethyldimethoxysilylethylisocyanat, Methyldiethoxysilylethylisocyanat, Ethyldiethoxysilylethylisocyanat, Methyldimethoxysilylpropylisocyanat, Ethyldimethoxysilylpropylisocyanat, Methyldiethoxysilylpropylisocyanat, Ethyldiethoxysilylpropylisocyanat, Methyldimethoxysilylbutylisocyanat, Ethyldimethoxysilylbutylisocyanat, Methyldiethoxysilylbutylisocyanat, Diethylethoxysilylbutylisocyanat, Ethyldiethoxysilylbutylisocyanat, Methyldimethoxysilylpentylisocyanat, Ethyldimethoxysilylpentylisocyanat, Methyldiethoxysilylpentylisocyanat, Ethyldiethoxysilylpentylisocyanat, Methyldimethoxysilylhexylisocyanat, Ethyldimethoxysilylhexylisocyanat, Methyldiethoxysilylhexylisocyanat, Ethyldiethoxysilylhexylisocyanat, Trimethoxysilylmethylisocyanat, Triethoxysilylmethylisocyanat, Trimethoxysilylethylisocyanat, Triethoxysilylethylisocyanat, Trimethoxysilylpropylisocyanat, Triethoxysilylpropylisocyanat, Trimethoxysilylbutylisocyanat, Triethoxysilylbutylisocyanat, Trimethoxysilylpentylisocyanat, Triethoxysilylpentylisocyanat, Trimethoxysilylhexylisocyanat, Triethoxysilylhexylisocyanat.

R ist vorzugsweise eine bivalente aliphatische Kohlenwasserstoffgruppe und kann gesättigt oder ungesättigt sein und hat bevorzugt eine Hauptkette von 1 bis 6 Kohlenstoffatomen, bevorzugt Methylen, Ethylen oder Propylen. Besonders bevorzugt sind 2 bis 6 Kohlenstoffatome. Besonders bevorzugt ist R ferner ein difunktioneller gerader oder verzweigter Alkylrest mit 1 bis 6, insbesondere 2 bis 6, Kohlenstoffatomen.

Nach einer weiteren bevorzugten Ausführungsform steht R für -CH₂-. Solche Verbindungen weisen eine hohe Reaktivität der Silylgruppen auf, was zur Verkürzung der Abbinde- und Härtungszeiten beiträgt.

Nach einer weiteren bevorzugten Ausführungsform steht R für -(CH₂)₃-. Wird für R eine Propylengruppe gewählt, so weisen diese Verbindungen eine besonders hohe Flexibilität auf. Diese Eigenschaft wird der längeren verbindenden Kohlenstoffkette zugeschrieben, da Methylengruppen allgemein flexibel und beweglich sind.

Vorzugsweise ist m null oder eins, d.h. das isocyanatofunktionelle Alkoxysilan bzw. Isocyanatosilan trägt eine Trialkoxy- oder Dialkoxygruppe. Generell verfügen Polymere, die Di- bzw. Trialkoxysilylgruppen enthalten, über hoch reaktive Verknüpfungsstellen, die ein schnelles Aushärten, hohe Vernetzungsgrade und damit gute Endfestigkeiten ermöglichen. Ein weiterer Vorteil solcher Alkoxygruppen enthaltenden Polymere ist darin zu sehen, dass bei der Aushärtung unter dem Einfluss von Feuchtigkeit Alkohole gebildet werden, die in den freigesetzten Mengen unbedenklich sind und verdunsten. Daher eignen sich derartige Zusammensetzungen insbesondere auch für den Heimwerkerbereich. Der besondere Vorteil der Verwendung von Dialkoxysilylgruppen liegt darin, dass die entsprechenden Zusammensetzungen nach der Aushärtung elastischer, weicher und flexibler sind als Trialkoxysilylgruppen enthaltende Systeme. Sie sind deshalb insbesondere für eine Anwendung als Dichtstoffe geeignet. Darüber hinaus spalten sie bei der Aushärtung noch weniger Alkohol ab und sind deshalb besonders interessant, wenn die Menge an freigesetztem Alkohol reduziert werden soll.

Mit Trialkoxysilylgruppen hingegen lässt sich ein höherer Vernetzungsgrad erreichen, was besonders vorteilhaft ist, wenn nach der Aushärtung eine härtere, festere Masse gewünscht wird. Darüber hinaus sind Trialkoxysilylgruppen reaktiver, vernetzen also schneller und senken somit die benötigte Menge an Katalysator; und sie weisen Vorteile beim "kalten Fluss" - der Formstabilität eines entsprechenden Klebstoffs unter dem Einfluss von Kraft- und gegebenenfalls Temperatureinwirkung - auf.

Als Alkoxygruppen werden insbesondere Methoxy-, Ethoxy-, Propyloxy- und Butyloxygruppen, gewählt.

Insbesondere ist eine Ausführungsform bevorzugt, in der R¹ und R² eine Methylgruppe sind. Verbindungen mit Alkoxysilylgruppen weisen je nach Natur der Alkylreste am Sauerstoffatom unterschiedliche Reaktivitäten bei chemischen Reaktionen auf. Dabei zeigt innerhalb der Alkoxygruppen die Methoxygruppe die größte Reaktivität. Auf derartige Silylgruppen kann also zurückgegriffen werden, wenn eine besonders schnelle Aushärtung gewünscht wird. Höhere aliphatische Reste wie Ethoxy bewirken eine im Vergleich zu Methoxygruppen bereits geringere Reaktivität der terminalen Alkoxysilylgruppe und können vorteilhaft zur Ausprägung abgestufter Vernetzungsgeschwindigkeiten eingesetzt werden. Neben Methoxy- und Ethoxygruppen können selbstverständlich auch größere Reste als hydrolysierbare Gruppen eingesetzt werden, die naturgemäß eine geringere Reaktivität aufweisen. Dies ist besonders dann von Interesse, wenn eine verzögerte Aushärtung gewünscht ist, beispielsweise bei Klebstoffen, die auch nach der Applikation noch ein Verschieben der verklebten Flächen gegeneinander zum Finden der endgültigen Position ermöglichen sollen.

Besonders bevorzugt werden Methyldimethoxysilylmethylisocyanat, Methyldiethoxysilylmethylisocyanat, Methyldimethoxysilylpropylisocyanat und Ethyldimethoxysilylpropylisocyanat oder deren Trialkoxyanaloga, insbesondere Trimethoxysilylpropylisocyanat bzw. 3-Isocyanatopropyl-trimethoxysilan oder Triethoxysilylpropylisocyanat bzw. 3-Isocyanatopropyltriethoxysilan.

Das oder die Isocyanatosilan(e) werden dabei in mindestens stöchiometrischer Menge zu den Hydroxylgruppen des Polyurethan-Prepolymers eingesetzt, bevorzugt wird jedoch ein geringer stöchiometrischer Überschuss der Isocyanatosilane gegenüber den Hydroxylgruppen. Diese stöchiometrische Überschuss der Isocyanatosilane gegenüber den Hydroxylgruppen-haltigen Prepolymeren beträgt zwischen 4 und 15 Äquivalentprozenten, vorzugsweise zwischen 5 und 10 Äquivalentprozenten bezogen auf die Isocyanatgruppierung.

Ein weiterer Gegenstand der vorliegenden Erfindung ist ein silyliertes Polyurethan, herstellbar nach dem oben beschriebenen erfindungsgemäßen Verfahren zur Herstellung eines silylierten Polyurethans. Solch ein silyliertes Polyurethan ist herstellbar durch ein Verfahren umfassend:
(A) Umsetzen
   (i) mindestens einer Polyolverbindung mit einem Molekulargewicht von 4 000 - 30 000 g/mol und mindestens einer gegenüber Isocyanaten monofunktionellen Verbindung mit
   (ii) mindestens einem Diisocyanat bei einem stöchiometrischen Überschuss der Summe aus Polyolverbindung(en) und monofunktioneller Verbindung gegenüber der / den Diisocyanatverbindung(en), wodurch ein Polyurethan-Prepolymer gebildet wird, das Hydroxyl-terminiert ist; und
(B) Umsetzen des Polyurethan-Prepolymers mit einem oder mehreren Isocyanatosilan(en) der Formel (I):

   OCN-R-Si-(R¹)ₘ(-OR²)₃₋ₘ (I)
worin m 0, 1 oder 2 ist, jedes R² ein Alkylrest mit 1 bis 4 Kohlenstoffatomen ist, jedes R¹ ein Alkylrest mit 1 bis 4 Kohlenstoffatomen ist und R eine difunktionelle organische Gruppe ist

Die für das erfindungsgemäße Verfahren beschriebenen Ausführungsformen gelten daher auch für das erfindungsgemäße silylierte Polyurethan.

Ein weiterer Gegenstand der vorliegenden Erfindung ist eine silanvernetzende, härtbare Zusammensetzung, enthaltend mindestens ein silyliertes Polyurethan erhältlich durch das erfindungsgemäße Verfahren oder mindestens ein erfindungsgemäßes silyliertes Polyurethan.

Ein weiterer Gegenstand der vorliegenden Erfindung ist die Verwendung einer Zubereitung enthaltend ein oder mehrere silylierte(s) Polyurethan(e) herstellbar nach dem erfindungsgemäßen Verfahren oder ein oder mehrere erfindungsgemäße silylierte(s) Polyurethan(e) oder eine erfindungsgemäße Zusammensetzung als Kleb-, oder Dichtstoff oder als Beschichtungsmittel.

Die erfindungsgemäßen Kleb- und Dichtstoff-Zusammensetzungen bzw. -Zubereitungen können neben den vorgenannten silylierten Polyurethanverbindungen noch weitere Hilfs- und Zusatzstoffe enthalten, die diesen Zubereitungen verbesserte elastische Eigenschaften, verbesserte Rückstellfähigkeit, ausreichend lange Verarbeitungszeit, schnelle Durchhärtungsgeschwindigkeit und geringe Restklebrigkeit verleihen. Zu diesen Hilfs- und Zusatzstoffen gehören beispielsweise Weichmacher, Stabilisatoren, Antioxidantien, Füllstoffe, Verdünner bzw. Reaktivverdünner, Trockenmittel, Haftvermittler und UV-Stabilisatoren, Fungizide, Flammschutzmittel, Pigmente, rheologische Hilfsmittel, Farbpigmente oder Farbpasten und/oder gegebenenfalls auch im geringen Umfang Lösungsmittel.

Als Weichmacher geeignet sind beispielsweise Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester, Thiobuttersäureester, Trimellithsäureester, Zitronensäureester sowie Ester auf Nitrocellulose- und Polyvinylacetat-Basis, sowie Gemische aus zwei oder mehr davon. Besonders geeignet sind die asymmetrischen Ester von Adipinsäuremonooctylester mit 2-Ethylhexanol (Edenol DOA, Fa. Cognis Deutschland GmbH, Düsseldorf) oder auch Ester der Abietinsäure.

Beispielsweise eignen sich von den Phthalsäureestern Dioctylphthalat (DOP), Dibutylphthalat, Diisoundecylphthalat (DIUP) oder Butylbenzylphthalat (BBP), von den Adipaten Dioctyladipat (DOA), Diisodecyladipat, Diisodecylsuccinat, Dibutylsebacat oder Butyloleat.

Ebenfalls als Weichmacher geeignet sind die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Cognis Deutschland GmbH, Düsseldorf).

Ferner eignen sich als Weichmacher endgruppenverschlossene Polyethylenglykole. Beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon.

Besonders bevorzugt sind jedoch endgruppenverschlossene Polyethylenglykole, wie Polyethylen- oder Polypropylenglykoldialkylether, wobei der Alkylrest ein bis vier C-Atome beträgt, und insbesondere die Dimethyl- und Diethylether von Diethylenglykol und Dipropylenglykol. Insbesondere mit Dimethyldiethylenglykol wird eine auch unter ungünstigeren Auftragungsbedingungen (geringe Luftfeuchtigkeit, niedrige Temperatur) eine akzeptable Aushärtung erreicht. Für weitere Einzelheiten zu Weichmachern wird auf die einschlägige Literatur der Technischen Chemie verwiesen.

Weichmacher können in den Zubereitungen zwischen 0 und 40, vorzugsweise zwischen 0 und 20 Gew.% (bezogen auf die Gesamtzusammensetzung) in der Zubereitung mit verwendet werden.

"Stabilisatoren" im Sinne dieser Erfindung sind Antioxidantien, UV-Stabilisatoren oder Hydrolyse-Stabilisatoren zu verstehen. Beispiele hierfür sind die handelsüblichen sterisch gehinderten Phenole und/oder Thioether und/oder substituierten Benzotriazole und/oder Amine vom "HALS"-Typ (Hindered Amine Light Stabilizer). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate, sterisch gehinderte Phenole, Phosphor und / oder Schwefel zugegeben werden. Der erfindungsgemäße Zubereitung kann bis zu etwa 2 Gew.-%, vorzugsweise etwa 1 Gew.-% an Stabilisatoren enthalten. Ferner kann die erfindungsgemäße Zubereitung weiterhin bis zu etwa 7 Gew.-%, insbesondere bis zu etwa 5 Gew.-% Antioxidantien enthalten.

Als Katalysatoren können alle bekannten Verbindungen eingesetzt werden, die die hydrolytische Spaltung der hydrolysierbaren Gruppen der Silangruppierungen sowie die anschließende Kondensation der Si-OH-Gruppe zu Siloxangruppierungen (Vernetzungsreaktion bzw. Haftvermittlungsfunktion) katalysieren können. Beispiele hierfür sind Titanate wie Tetrabutyltitanat und Tetrapropyltitanat; Bismutverbindungen, wie Bismut-tris-2-ethylhexanoat, Zinncarboxylate wie Dibutylzinndilaulat, Dibutylzinndiacetat, Dibutylzinndiethylhexanoat, Dibutylzinndioctoat, Dibutylzinndimethylmaleat, Dibutylzinndiethylmaleat, Dibutylzinndibutylmaleat, Dibutylzinndiiosooctylmaleat, Dibutylzinnditridecylmaleat, Dibutylzinndibenzylmaleat, Dibutylzinnmaleat, Dibutylzinndiacetat, Zinnoctaoat, Dioctylzinndistealeat, Dioctylzinndilaurat, Dioctylzinndiethylmaleat, Dioctylzinndiisooctylmaleat, Dioctylzinndiacetat, und Zinnnaphthenoat; Zinnalkoxide wie Dibutylzinndimethoxid, Dibutylzinndiphenoxid, und Dibutylzinndiisoproxid; Zinnoxide wie Dibutylzinnoxid, und Dioctylzinnoxid; Reaktionsprodukte zwischen Dibutylzinnoxiden und Phthalsäureestern, Dibutylzinnbisacetylacetonat; Organoaluminumverbindungen wie Aluminumtrisacetylacetonat, Aluminumtrisethylacetoacetat, und Diisopropoxyaluminum-ethylacetoacetat; Chelatverbindungen wie Zirconumtetraacetylacetonat, und Titantetraacetylacetonat; Bleioctanoat; Aminverbindungen oder ihre Salze mit Carbonsäuren, wie Butylamin, Octylamin, Laurylamin, Dibutylamine, Monoethanolamine, Diethanolamine, Triethanolamin, Diethylenetriamin, Triethylenetetramin, Oleylamine, Cyclohexylamin, Benzylamin, Diethylaminopropylamin, Xylylenediamin, Triethylenediamin, Guanidin, Diphenylguanidin, 2,4,6-tris(dimethylaminomethyl)phenol, Morpholin, N-methylmorpholin und 1,8-Diazabicyclo-(5,4,0)-undecen-7 (DBU), ein niedermolekulares Polyamid Harz erhalten aus einem Überschuß eines Polyamins und einer Polybasischen Säure, Addukte aus einem Polyamin im Überschuß mit einem Epoxid, Silanhaftvermittler mit Aminogruppen, wie 3-Aminopropyltrimethoxysilan, und N-(β-aminoethyl)aminopropylmethyldimethoxysilan. Der Katalysator, bevorzugt Mischungen mehrerer Katalysatoren, werden in einer Menge von 0,001 bis etwa 5 Gew.-% bezogen auf das Gesamtgewicht der Zubereitung eingesetzt. Bevorzugt sind Gew.-% von 0,01 bis 1, insbesondere 0,03 bis 0,5, besonders bevorzugt kleiner als 0,1, Gew.-% Katalysator, bezogen auf das Gesamtgewicht der Zubereitung

Die erfindungsgemäße Zusammensetzung bzw. Zubereitung kann zusätzlich Füllstoffe enthalten. Hier eignen sich beispielsweise Kreide, Kalkmehl, gefällte und/oder pyrogene Kieselsäure, Zeolithe, Bentonite, Magnesiumcarbonat, Kieselgur, Tonerde, Ton, Talkum, Titanoxid, Eisenoxid, Zinkoxid, Sand, Quartz, Flint, Glimmer, Glaspulver und andere gemahlene Mineralstoffe. Weiterhin können auch organische Füllstoffe eingesetzt werden, insbesondere Ruß, Graphit, Holzfasern, Holzmehl, Sägespäne, Zellstoff, Baumwolle, Pulpe, Baumwolle, Hackschnitzel, Häcksel, Spreu, gemahlene Walnussschalen und andere Faserkurzschnitte. Ferner können auch Kurzfasern wie Glasfaser, Glasfilament, Polyacrylnitril, Kohlefaser, Kevlarfaser oder auch Polyethylenfasern zugesetzt werden. Aluminiumpulver ist ebenfalls als Füllstoff geeignet.

Die pyrogenen und/oder gefällten Kieselsäuren weisen vorteilhaft eine BET-Oberfläche von 10 bis 90 m²/g, insbesondere von 35 bis 65 m²/g, auf. Bei Ihrer Verwendung bewirken sie keine zusätzliche Erhöhung der Viskosität der erfindungsgemäßen Zubereitung, tragen aber zu einer Verstärkung der gehärteten Zubereitung bei.

Besonders bevorzugt wird eine hochdisperse Kieselsäure mit einer BET-Oberfläche von 45 bis 55 m²/g eingesetzt, insbesondere mit einer BET-Oberfläche von etwa 50 m²/g. Derartige Kieselsäuren weisen den zusätzlichen Vorteil einer um 30 bis 50 % verkürzten Einarbeitungszeit im Vergleich zu Kieselsäuren mit höherer BET-Oberfläche auf. Ein weiterer Vorteil liegt darin, dass sich die genannte hochdisperse Kieselsäure in silanterminierte Kleb-, Dicht- oder Beschichtungsstoffe in erheblich höherer Konzentration einarbeiten lässt, ohne dass die Fließeigenschaften der Kleb-, Dicht- oder Beschichtungsstoffe beeinträchtigt werden.

Es ist ebenso denkbar, pyrogene und/oder gefällte Kieselsäuren mit einer höheren BET-Oberfläche, vorteilhafterweise mit 100 - 250 m²/g, insbesondere 110 - 170 m²/g, als Füllstoff einzusetzen. Aufgrund der höheren BET-Oberfläche, kann man den gleichen Effekt, z.B. Verstärkung der gehärteten Zubereitung, bei einem geringeren Gewichtsanteil Kieselsäure erzielen. Somit kann man weitere Stoffe einsetzen, um die erfindungsgemäße Zubereitung hinsichtlich anderer Anforderungen zu verbessern.

Ferner eignen sich als Füllstoffe Hohlkugeln mit einer mineralischen Hülle oder einer Kunststoffhülle. Dies können beispielsweise Glashohlkugeln sein, die unter den Handelsbezeichnungen Glass Bubbles® kommerziell erhältlich sind. Hohlkugeln auf Kunststoffbasis sind z.B. unter den Handelsbezeichnungen Expancel® oder Dualite® erhältlich. Diese sind aus anorganischen oder organischen Stoffen zusammengesetzt, jede mit einem Durchmesser von 1 mm oder weniger, bevorzugt von 500 µm oder weniger.

Für manche Anwendungen sind Füllstoffe bevorzugt, die den Zubereitungen Thixotropie verleihen. Solche Füllstoffe werden auch als rheologische Additive bzw. Hilfsmittel beschrieben, z. B. Kieselgele, Aerosile, Kohle, Ruß oder quellbare Kunststoffe wie PVC. Ferner können als rheologische Modifikatoren folgende organische Additive eingesetzt werden: hydrogenisiertes Rizinusöl, Fettsäureamide Harnstoffderivate und Polyharnstoffderivate. Um gut aus einer geeigneten Dosiervorrichtung (z. B. Tube) auspressbar zu sein, besitzen solche Zubereitungen eine Viskosität von 30.000 bis 150.000, vorzugsweise 40.000 bis 80.000 mPas, insbesondere 50.000 bis 60.000 mPas oder auch 3.000 bis 15.000 mPas.

Die Füllstoffe werden vorzugsweise in einer Menge von 1 bis 80 Gew.-%, vorzugsweise von 5 bis 60 Gew.%, bezogen auf das Gesamtgewicht der Zubereitung eingesetzt.

Beispiele für geeignete Pigmente sind Titandioxid, Eisenoxide oder Ruß.

Häufig ist es sinnvoll, die erfindungsgemäßen Zubereitungen durch Trockenmittel weiter gegenüber eindringender Feuchtigkeit zu stabilisieren, um die Lagerbarkeit (shelf-life) noch weiter zu erhöhen. Es besteht gelegentlich auch Bedarf, die Viskosität des erfindungsgemäßen Kleb- oder Dichtstoffs für bestimmte Anwendungen durch Verwendung eines Reaktiwerdünners zu erniedrigen. Als Reaktivverdünner kann man alle Verbindungen, die mit dem Kleb- oder Dichtstoff unter Verringerung der Viskosität mischbar sind und über mindestens eine feuchtigkeitsvernetzende oder mit dem Bindemittel reaktive Gruppe verfügen, einsetzen. Als Reaktivverdünner kann man z.B. folgende Stoffe einsetzen: mit Isocyanatosilanen umgesetzte Polyalkylenglykole (z.B. Synalox 100-50B, DOW), Carbamatopropyltrimethoxysilan, Alkyltrimethoxysilan, Alkyltriethoxysilan, wie Methyltrimethoxysilan, Methyltriethoxysilan sowie Vinyltrimethoxysilan (XL 10, Wacker), Vinyltriethoxysilan, Phenyltrimethoxysilan, Phenyltriethoxysilan, Octyltrimethoxysilan, Tetraethoxysilan, Vinyldimethoxymethylsilan (XL12, Wacker), Vinyltriethoxysilan (GF56, Wacker), Vinyltriacetoxysilan (GF62, Wacker), Isooctyltrimethoxysilan (IO Trimethoxy), Isooctyltriethoxysilan (IO Triethoxy, Wacker), N-Trimethoxysilylmethyl-O-methylcarbamat (XL63, Wacker), N-Dimethoxy(methyl)silylmethyl-O-methyl-carbamat (XL65, Wacker), Hexadecyltrimethoxysilan, 3-Octanoylthio-1-propyltriethoxysilan und Teilhydrolysate dieser Verbindungen.

Ferner sind ebenfalls folgende Polymere von Kaneka Corp. als Reaktivverdünner einsetzbar: MS S203H, MS S303H, MS SAT 010, und MS SAX 350.

Ebenso kann man silanmodifizierte Polyether verwenden, die sich z.B. aus der Umsetzung von Isocyanatosilan mit Synalox Typen ableiten.

Eine Vielzahl der vorgenannten silanfunktionellen Reaktivverdünner haben gleichzeitig eine trocknende und / oder haftvermittelnde Wirkung in der Zubereitung. Diese Reaktivverdünner werden in Mengen zwischen 0,1 und 15 Gew.%, vorzugsweise zwischen 1 und 5 Gew.%, bezogen auf die Gesamtzusammensetzung der Zubereitung eingesetzt.

Unter einem Haftvermittler wird eine Substanz verstanden, die die Haftungseigenschaften von Klebeschichten auf Oberflächen verbessert. Es können ein oder mehrere Haftvermittler enthalten sein. Als Haftvermittler eignen sich aber auch so genannte Klebrigmacher wie Kohlenwasserstoffharze, Phenolharze, Terpen-Phenolharze, Resorcinharze oder deren Derivate, modifizierte oder unmodifizierte Harzsäuren bzw. -ester (Abietinsäurederivate), Polyamine, Polyaminoamide, Anhydride und Anhydrid-enthaltende Copolymere. Auch der Zusatz von Polyepoxidharzen in geringen Mengen kann bei manchen Substraten die Haftung verbessern. Hierfür werden dann vorzugsweise die festen Epoxidharze mit einem Molekulargewicht von über 700 in fein gemahlener Form eingesetzt. Falls Klebrigmacher als Haftvermittler eingesetzt werden, hängt deren Art und Menge von der Kleb- / Dichtstoffzusammensetzung ab sowie von dem Substrat, auf welches dieser appliziert wird. Typische klebrigmachende Harze (Tackifier) wie z.B. Terpenphenolharze oder Harzsäurederivate werden in Konzentrationen zwischen 5 und 20 Gew.% verwendet, typische Haftvermittler wie Polyamine, Polyaminoamide oder Phenolharze oder Resorcinderivate werden im Bereich zwischen 0,1 und 20 Gew.%, insbesondere 0,5 bis 10, besonders bevorzugt 1 bis 5 Gew.-%, bezogen auf die Gesamtzusammensetzung der Zubereitung verwendet. Besonders gut geeignet sind Silan-Haftvermittler, insbesondere Alkoxysilane, mit einer (weiteren) funktionellen Gruppe wie z.B. einer Aminogruppe, einer Mercaptogruppe, einer Epoxygruppe, einer Carboxylgruppe, einer Vinylgruppe, einer Isocyanatgruppe, einer Isocyanuratgruppe oder einem Halogen. Beispiele sind γ-Mercaptopropyltrimethoxysilan, γ-Mercaptopropyltriethoxysilan, γ-Mercaptopropylmethyldimethoxysilan, γ-Glycidoxypropyltrimethoxysilan, γ-Glycidoxypropyltriethoxysilan, γ-Glycidoxypropylmethyldimethoxysilan, β-Carboxyethyltriethoxysilan, β-Carboxyethylphenylbis(2-methoxyethoxy)silan, N-β-(Carboxymethyl) aminoethyl-γ-aminopropyltrimethoxysilan, Vinyltrimethoxysilan, Vinyltriethoxysilan, γ-Acroyloxypropylmethyltriethoxysilan, γ-Isocyanatopropyltrimethoxysilan, γ-Isocyanatopropyltriethoxysilan, γ-Isocyanatopropylmethyldiethoxysilan, γ-Isocyanatopropylmethyldimethoxysilan, Tris(trimethoxysilyl)isocyanurat und γ-Chloropropyltrimethoxysilan.

Besonders bevorzugt als Haftvermittler sind insbesondere Aminosilane (aminofunktionelle Alkoxysilane bzw. Aminoalkyl-alkoxysilane), wie z.B. γ-Aminopropyl-trimethoxysilan, γ-Aminopropyltriethoxysilan, γ-Aminopropyltriisopropoxysilan, γ-Aminopropylmethyldimethoxysilan, γ-Aminopropylmethyldiethoxysilan, γ-(2-Aminoethyl)-3-aminopropyltrimethoxysilan, γ-(2-Aminoethyl) aminopropylmethyldimethoxysilan, γ-(2-Aminoethyl)aminopropyltriethoxysilan, γ-(2-Aminoethyl) aminopropylmethyldiethoxysilan, γ-(2-Aminoethyl) aminopropyltriisopropoxysilan, N-Phenyl-γ-aminopropyltrimethoxysilan, N-Benzyl-γ-aminopropyltrimethoxysilan, und N-Vinylbenzyl-γ-aminopropyltriethoxysilan, oder oligomere Aminosilane, wie z.B. aminoalkylgruppenmodifiziertes Alkylpolysiloxan (Dynasylan 1146).

Die Herstellung der erfindungsgemäßen Zubereitung erfolgt nach bekannten Verfahren durch inniges Vermischen der Bestandteile in geeigneten Dispergieraggregaten, z. B. Schnellmischer, Kneter, Planetenmischer, Planetendissolver, Innenmischer, so genannte "Banburymischer", Doppelschneckenextruder und ähnliche dem Fachmann bekannte Mischaggregate.

Die erfindungsgemäßen Zubereitungen eignen sich als feuchtigkeitshärtende Kleb- und Dichtstoffzubereitungen sowie Beschichtungsmittel und Haftklebstoffe.

Eine bevorzugte Ausführungsform der erfindungsgemäßen Zubereitung kann enthalten:
- 5 bis 50 Gew.-%, bevorzugt 10 bis 40 Gew.-% einer oder mehrerer Verbindungen der erfindungsgemäßen silylierten Polyurethane,
- 0 bis 30 Gew.-%, insbesondere weniger als 20 Gew.-%, besonders bevorzugt weniger als 10 Gew.-% Weichmacher, z.B. 0,5 - 30, insbesondere 1 - 25 Gew.-% Weichmacher,
- 0 bis 80 Gew.-%, bevorzugt 20 bis 60 Gew.-%, besonders bevorzugt 30 bis 55 Gew.-% Füllstoffe.

Ferner kann die Ausführungsform weitere Hilfsstoffe enthalten, z.B. 0 - 10 Gew.-%, insbesondere 0,5 - 5 Gew.-%.

Die Gesamtheit aller Bestandteile summiert sich zu 100 Gew.-%, wobei sich die Summe der oben aufgeführten Hauptbestandteile allein nicht zu 100 Gew.-% addieren muß.

In den nachfolgenden Ausführungsbeispielen soll die Erfindung näher erläutert werden, wobei die Auswahl der Beispiele keine Beschränkung des Umfangs des Erfindungsgegenstandes darstellen soll.

### Beispiele

### Vergleichsbeispiel 1 (Verwendung von Monoisocyanat)

1285 g (156 mmol) Polypropylenglykol 8000 (OHZ = 13,6) und 348 g Diisoundecylphtalat (DIUP) werden in einem 2000 ml Dreihalskolben bei 80°C im Vakuum getrocknet. Unter Stickstoffatmosphäre wird bei 80°C 0,35 g Dibutylzinnlaurat hinzugegeben. Anschließend werden 27,1 g (104 mmol) TMXDI zugegeben und nach einstündigem Rühren wird erst mit 2,1 g (17 mmol) Phenylisocyanat und dann mit 20,5 g (95 mmol) Isocyanatopropyltrimethoxysilan (%NCO = 19,6) versetzt und eine weitere Stunde bei 80°C gerührt. Die entstandene Präpolymerenmischung wird abgekühlt und mit 34,8 g Vinyltrimethoxysilan und 22,4 g einer Mischung aus 70 Gew.-% Bis(1,2,2,6,6-pentamethyl-4-piperidyl) sebacat und 30 Gew.-% Methyl-1,2,2,6,6-pentamethyl-4-piperidylsebazat (Tinuvin 765) versetzt. Das Produkt wird feuchtigkeitsdicht unter Stickstoffatmosphäre in einem Glasgefäß gelagert, bevor es gemäß der allgemeinen Vorschrift zu einer härtbaren Zubereitung weiterverarbeitet wird

### Vergleichsbeispiel 2 (kein Zusatz von monofunktionellen Verbindungen)

324 g (38 mmol) Polypropylenglykol 8000 (OHZ = 13,6) werden in einem 500 ml Dreihalskolben bei 80°C im Vakuum getrocknet. Unter Stickstoffatmosphäre wird bei 80°C 0,07 g Dibutylzinnlaurat hinzugegeben. Anschließend werden 5,8 g (23 mmol) TMXDI zugegeben und nach einstündigem Rühren wird mit 7,9 g (37 mmol) Isocyanatopropyltrimethoxysilan (%NCO = 19,6) versetzt und eine weitere Stunde bei 80°C gerührt. Die entstandene Präpolymerenmischung wird abgekühlt und mit 7,0 g Vinyltrimethoxysilan und 5,3 g einer Mischung aus 70 Gew.-% Bis(1,2,2,6,6-pentamethyl-4-piperidyl) sebacat und 30 Gew.-% Methyl-1,2,2,6,6-pentamethyl-4-piperidylsebazat (Tinuvin 765) versetzt. Das Produkt wird feuchtigkeitsdicht unter Stickstoffatmosphäre in einem Glasgefäß gelagert, bevor es gemäß der allgemeinen Vorschrift zu einer härtbaren Zubereitung weiterverarbeitet wird.

### Vergleichsbeispiel 3 (Verwendung von Monoisocyanat)

1596 g (141 mmol) Polypropylenglykol 12000 (OHZ = 9,7) werden in einem 2000 ml Dreihalskolben bei 80°C im Vakuum getrocknet. Unter Stickstoffatmosphäre wird bei 80°C 0,35 g Dibutylzinnlaurat hinzugegeben. Anschließend werden 17,6 g (72 mmol) TMXDI zugegeben und nach einstündigem Rühren wird erst mit 5,2 g (42 mmol) Phenylisocyanat und dann mit 24,2 g (113 mmol) Isocyanatopropyltrimethoxysilan (%NCO = 19,6) versetzt und eine weitere Stunde bei 80°C gerührt. Die entstandene Präpolymerenmischung wird abgekühlt und mit 34,0 g Vinyltrimethoxysilan und 22,0 g einer Mischung aus 70 Gew.-% Bis(1,2,2,6,6-pentamethyl-4-piperidyl) sebacat und 30 Gew.-% Methyl-1,2,2,6,6-pentamethyl-4-piperidylsebazat (Tinuvin 765) versetzt. Das Produkt wird feuchtigkeitsdicht unter Stickstoffatmosphäre in einem Glasgefäß gelagert, bevor es gemäß der allgemeinen Vorschrift zu einer härtbaren Zubereitung weiterverarbeitet wird.

### Vergleichsbeispiel 4 (kein monofunktioneller Zusatz)

1255 g (152 mmol) Polypropylenglykol 8000 (OHZ = 13,6), und 340 g DIUP werden in einem 2000 ml Dreihalskolben bei 80°C im Vakuum getrocknet. Unter Stickstoffatmosphäre wird bei 80°C 0,34 g Dibutylzinnlaurat hinzugegeben. Anschließend werden 26,5 g (106 mmol) TMXDI zugegeben und nach einstündigem Rühren wird mit 21,5 g (100 mmol) Isocyanatopropyltrimethoxysilan (%NCO = 19,6) versetzt und eine weitere Stunde bei 80°C gerührt. Die entstandene Präpolymerenmischung wird abgekühlt und mit 34,0 g Vinyltrimethoxysilan und 21,9 g einer Mischung aus 70 Gew.-% Bis(1,2,2,6,6-pentamethyl-4-piperidyl) sebacat und 30 Gew.-% Methyl-1,2,2,6,6-pentamethyl-4-piperidylsebazat (Tinuvin 765) versetzt. Das Produkt wird feuchtigkeitsdicht unter Stickstoffatmosphäre in einem Glasgefäß gelagert, bevor es gemäß der allgemeinen Vorschrift zu einer härtbaren Zubereitung weiterverarbeitet wird.

### Beispiel 1 (erfindungsgemäß)

264 g (32 mmol) Polypropylenglykol 8000 (OHZ = 13,6), 70 g DIUP und Ethylhexanol 0,5 g (4 mmol) werden in einem 500 ml Dreihalskolben bei 80°C im Vakuum getrocknet. Unter Stickstoffatmosphäre wird bei 80°C 0,07 g Dibutylzinnlaurat hinzugegeben. Anschließend werden 6 g (25 mmol) TMXDI zugegeben und nach einstündigem Rühren wird mit 4,5 g (23 mmol) Isocyanatopropyltrimethoxysilan (%NCO = 19,6) versetzt und eine weitere Stunde bei 80°C gerührt. Die entstandene Präpolymerenmischung wird abgekühlt und mit 7,0 g Vinyltrimethoxysilan und 5,3 g einer Mischung aus 70 Gew.-% Bis(1,2,2,6,6-pentamethyl-4-piperidyl) sebacat und 30 Gew.-% Methyl-1,2,2,6,6-pentamethyl-4-piperidylsebazat (Tinuvin 765) versetzt. Das Produkt wird feuchtigkeitsdicht unter Stickstoffatmosphäre in einem Glasgefäß gelagert, bevor es gemäß der allgemeinen Vorschrift zu einer härtbaren Zubereitung weiterverarbeitet wird

### Beispiel 2 (erfindungsgemäß)

323 g (28 mmol) Polypropylenglykol 12000 (OHZ = 9,7) und Ethylhexanol 1,2 g (9 mmol) werden in einem 500 ml Dreihalskolben bei 80°C im Vakuum getrocknet. Unter Stickstoffatmosphäre wird bei 80°C 0,07 g Dibutylzinnlaurat hinzugegeben. Anschließend werden 5,5 g (23 mmol) TMXDI zugegeben und nach einstündigem Rühren wird mit 4,5 g (23 mmol) Isocyanatopropyltrimethoxysilan (%NCO = 19,6) versetzt und eine weitere Stunde bei 80°C gerührt. Die entstandene Präpolymerenmischung wird abgekühlt und mit 7,0 g Vinyltrimethoxysilan und 5,3 g einer Mischung aus 70 Gew.-% Bis(1,2,2,6,6-pentamethyl-4-piperidyl) sebacat und 30 Gew.-% Methyl-1,2,2,6,6-pentamethyl-4-piperidylsebazat (Tinuvin 765) versetzt. Das Produkt wird feuchtigkeitsdicht unter Stickstoffatmosphäre in einem Glasgefäß gelagert, bevor es gemäß der allgemeinen Vorschrift zu einer härtbaren Zubereitung weiterverarbeitet wird.

### Allgemeiner Vorschrift zur Herstellung der erfindungsgemäßen härtbaren Zubereitungen:

25 Gewichtsteile der in den Beispielen hergestellten Polymermischung wurden anschließend in einem Rührkessel mit 20 Gewichtsteilen Diisoundecylphtalat mittels eines Speedmixers 30 s innig vermengt.

In die so erhaltene Mischung wurden nacheinander 45 Gewichtsteile gefälltes Calciumcarbonat (je 50 % Socal U1S2 und Omya BLP3), 3,35 Gewichtsteile stabilisiertes Titandioxid vom Rutiltyp (Kronos 2056), 1,5 Teile Vinyltrimethoxysilan ("VTMO", Wacker Geniosil XL10), 0,95 Gewichtsteile 3-Aminopropyltrimethoxisilan ("AMMO", Wacker Geniosil GF96) sowie 0,05 Gewichtsteile Dibutylzinndilaurat ("Metatin 740") eingebracht und das so entstandene Gemenge für 30 s in einem Speedmixer innig vermengt.

### Prüfbedingungen

Die hergestellten Polymere wurden jeweils mit 1 % N-Aminoethyl-3-aminopropyltrimethoxysilan und 0,2 % Dibutylzinndilaurat versetzt. Von diesen Mischungen wurden Hautbildungszeit (Skin over time / SOT) und die Zeit zur Ausbildung einer klebfreien Schicht (Tack free time / TFT) ermittelt.

Weiterhin wurden die oben genannten Mischungen mit einer Schichtstärke von 2 mm auf mit Polyetherfolie bespannte Glasplatten aufgetragen. Aus diesen Filmen wurden nach 7 Tagen Lagerung (23°C, 50% relative Luftfeuchtigkeit) Probenkörper (S2-Prüfkörper) ausgestanzt und die mechanischen Daten (Module, Dehnung, Rückstellvermögen) in Anlehnung an DIN EN 27389 und DIN EN 28339 bestimmt.

Die Ergebnisse der erfindungsgemäß hergestellten härtbaren Kleb-/Dichtstoffzubereitungen sind in der nachfolgenden Tabelle 1 zusammengefasst.

Die erfindungsgemäßen Zubereitungen der Beispiele 3 und 4 zeigen ein ausgewogenes Verhältnis von Dehnfähigkeit (Bruchdehnung in %), niedrigeren E-Modul bei 50 bzw. 100 % Dehnung (E-100 bzw. E-50) und Rückstellkraft in %. Die Zusammensetzung gemäß Vergleichsbeispiel 6 weist zwar eine sehr hohe Rückstellkraft auf, allerdings zu Lasten eines sehr hohen E-Moduls bei 50 bzw. 100 % Dehnung. Dies ist unerwünscht, da dies eine Dehnungsfuge sehr stark belasten würde. Wenn die Vernetzungsdichte durch Reduktion des Anteils an Silangruppen vorgenommen wird, sieht man aus dem Vergleichsbeispiel 8, dass dies eine sehr starke Reduzierung der Rückstellkraft zur Folge hat. Die Zubereitungen der Vergleichsbeispiele 5 und 7, bei denen silylierte Polyurethane unter Mitverwendung von monofunktionellen Isocyanaten eingesetzt wurden, haben zwar vergleichsweise günstige mechanische Daten, ihr Einsatz ist jedoch aus arbeitshygienischer Sicht unerwünscht.

| | **Beispiel 3 erfindungsgemäß** | **Beispiel 4 erfindungsgemäß** | **Vergleichsbeispiel 5** |
|---|---|---|---|
| **verwendetes Polymer aus:** | **Beispiel 1** | **Beispiel 2** | **Vergleichsbeispiel 1** |
| | | | |
| **Viskosität des Polymers (mPa) Formulierung der Zubereitung:** | **33.600** | **129.000** | **67.200** |
| | | | |

### Ergebnisse 7 Tage

| SOT (Klimaraum) | **45 Min** | **48 Min** | **24 Min** |
|---|---|---|---|
| TFT (Klimaraum) | **<24h** | **<24h** | **<24h** |
| Bruch in N/mm² | **0,55** | **0,48** | **0,67** |
| Dehnung in % | **278%** | **278%** | **361%** |
| E- 50 N/mm² | **0,12** | **0,10** | **0,17** |
| E- 100 N/mm² | **0,25** | **0,21** | **0,31** |
| Durchhärtung in mm/24Std. | **2,0** | **2,1** | - |
| Rückstellkraft in % | **85%** | **85%** | **80%** |
| | | | |

| | **Vergleichsbeispiel 6** | **Vergleichsbeispiel 7** | **Vergleichsbeispiel 8** |
|---|---|---|---|
| **verwendetes Polymer aus:** | **Vergleichsbeispiel 2** | **Vergleichsbeispiel 3** | **Vergleichsbeispiel 4** |
| | | | |
| **Viskosität des Polymers (mPa)** | **67.200** | **92.800** | **33.600** |
| **Formulierung der Zubereitung:** | | | |
| | | | |
| | | | |

| ***Ergebnisse 7 Taqe*** | | | |
|---|---|---|---|
| | | | |
| | | | |

| SOT (Klimaraum) | **12 Min** | **25 Min** | **28 Min** |
|---|---|---|---|
| TFT (Klimaraum) | **< 24 Std** | **<24h** | **<24h** |
| Bruch in N/mm² | **1,00** | **0,59** | **0,51** |
| Dehnung in % | **267%** | **330%** | **285%** |
| E- 50 N/mm² | **0,38** | **0,16** | **0,14** |
| E- 100 N/mm² | **0,54** | **0,29** | **0,26** |
| Durchhärtung in mm/24Std. | **2,6** | - | - |
| Rückstellkraft in % | **95%** | **80%** | **75-80%** |

## Patentansprüche

1. Verfahren zur Herstellung eines silylierten Polyurethans, umfassend:
(A) Umsetzen
(i) mindestens einer Polyolverbindung mit einem Molekulargewicht von 4 000 - 30 000 g/mol und mindestens einer gegenüber Isocyanaten monofunktionellen Verbindung mit
(ii) mindestens einem Diisocyanat bei einem stöchiometrischen Überschuss der Summe aus Polyolverbindung(en) und monofunktioneller Verbindung gegenüber der Diisocyanatverbindung(en), wodurch ein Polyurethan-Prepolymer gebildet wird, das Hydroxyl-terminiert ist; und
(B) Umsetzen des Polyurethan-Prepolymers mit einem oder mehreren Isocyanatosllan(en) der Formel (I):
OCN-R-Si-(R¹)ₘ(-OR²)₃₋ₘ (I)
worin m 0, 1 oder 2 Ist, jedes R² ein Alkylrest mit 1 bis 4 Kohlenstoffatomen ist, jedes R¹ ein Alkylrest mit 1 bis 4 Kohlenstoffatomen ist und R eine difunktionelle organische Gruppe ist,
**dadurch gekennzeichnet, dass** der Anteil der gegenüber Isocyanaten monofunktionellen Verbindung 10 bis 40 Mol% der Mischung aus Polyolverbindung(en) und gegenüber Isocyanaten monofunktionellen Verbindung beträgt.

2. Verfahren nach Anspruch 1 **dadurch gekennzeichnet, dass** die gegenüber Isocyanaten monofunktionelle Verbindung ausgewählt wird aus Monoalkoholen, Monomercaptanen, Monoaminen oder deren Mischungen.

3. Verfahren nach Anspruch 1 oder 2, **dadurch gekennzeichnet, dass** R ein difunktioneller gerader oder verzweigter Alkylrest mit 1 bis 6, insbesondere 2 bis 6, Kohleristoffatomen ist.

4. Verfahren nach mindestens einem der Ansprüche 1 bis 3, **dadurch gekennzeichnet, dass** m null ist.

5. Verfahren nach mindestens einem der Ansprüche 1 bis 3, **dadurch gekennzeichnet, dass** m eins ist.

6. Verfahren nach mindestens einem der Ansprüche 1 bis 5, **dadurch gekennzeichnet, dass** der Anteil der gegenüber Isocyanaten monofunktionellen Verbindung 15 bis 30 Mol% der Mischung aus Polyolverbindung(en) und gegenüber Isocyanaten monofunktionellen Verbindung beträgt.

7. Verfahren nach mindestens einem der Ansprüche 1 bis 6, **dadurch gekennzeichnet, dass** das Isocyanatosllan der Formel (I) 3-Isocyanatopropyltrimethoxysilan oder 3-Isocyanatopropyl-triethoxysilan ist.

8. Silyliertes Polyurethan, hergestellt durch ein Verfahren umfassend:
(A) Umsetzen
(i) mindestens einer Polyolverbindung mit einem Molekulargewicht von 4 000 - 30 000 g/mol und mindestens einer gegenüber Isocyanaten monofunktionellen Verbindung mit
(ii) mindestens einem Diisocyanat bei einem stöchlometrischen Überschuss der Summe aus Polyolverbindung(en) und monofunktioneller Verbindung gegenüber der Diisocyanatverbindung(en), wodurch ein Polyurethan-Prepolymer gebildet wird, das Hydroxyl-terminiert ist; und
(B) Umsetzen des Polyurethan-Prepolymers mit einem oder mehreren Isocyanatosilan(en) der Formel (I):
OCN-R-Si-(R¹)ₘ(-OR²)₃₋ₘ (I)
worin m 0, 1 oder 2 ist, jedes R² ein Alkylrest mit 1 bis 4 Kohlenstoffatomen ist, Jedes R¹ ein Alkylrest mit 1 bis 4 Kohlenstoffatomen ist und R eine difunktionelle organische Gruppe ist
**dadurch gekennzeichnet, dass** der Anteil der gegenüber Isocyanaten monofunktionellen Verbindung 90 bis 40 Mol% der Mischung aus Polyolverbindung(en) und gegenüber Isocyanaten nionofunktionellen Verbindung beträgt

9. Silyliertes Polyurethan nach Anspruch 8, **dadurch gekennzeichnet, dass** m null oder eins ist.

10. Silyliertes Polyurethan nach mindestens einem der Ansprüche 8 oder 9, **dadurch gekennzeichnet, dass** R ein difunktioneller gerader oder verzweigter Alkylrest mit 1 bis 6, insbesondere 2 bis 6, Kohlenstoffatomen ist.

11. Silyliertes Polyurethan nach mindestens einem der Ansprüche 8 bis 10, **dadurch gekennzeichnet, dass** die gegenüber Isocyanaten monofunktionelle Verbindung ausgewählt wird aus Monoalkoholen, Monomercaptanen, Monoaminen oder deren Mischungen.

12. Silyliertes Polyurethan nach mindestens einem der Ansprüche 8 bis 11, **dadurch gekennzeichnet, dass** der Anteil der gegenüber Isocyanaten monofunktionellen Verbindung 15 bis 30 Mol% der Mischung aus Polyolverbindung(en) und gegenüber Isocyanaten monofunktionellen Verbindung beträgt

13. Silyliertes Polyurethan nach mindestens einem der Ansprüche 8 bis 12, **dadurch gekennzeichnet, dass** das Isocyanatosilan der Formel (I) 3-Isocyanatopropyltrimethoxysilan oder 3-Isocyanatopropyl-triethoxysilan ist und / oder die Diisocyanatverbindung ausgewählt ist aus der Gruppe bestehend aus 2,4-Toluoldiisocyanat, 2,6-Toluol-dilsocyanat, 4,4'-Diphenyl-methandiisocyanat, 2,4'-Diphenyl-methandiisocyanat, 1-Isocyanato-3,3,5-trimethyl-5-isocyanatomethylcyclohexan (Isophorondiisocyanat, IPDI), 4,4'-Dicyclohexylmethan-diisocyanat-Isomeren, Tetramethylxylylendiisocyanat (TMXDI), und Mischungen davon.

14. Silanvernetzende, härtbare Zusammensetzung, enthaltend mindestens ein silyliertes Polyurethan erhältlich durch ein Verfahren nach einem der Ansprüche 1 bis 7 oder mindestens ein silyliertes Polyurethan nach einem der Ansprüche 8 bis 13.

15. Verwendung einer Zubereitung enthaltend ein oder mehrere silylierte(s) Polyurethan(e) herstellbar nach einem Verfahren nach einem der Ansprüche 1 bis 7 oder ein oder mehrere silylierte(s) Polyurethan(e) nach mindestens einem der Ansprüche 8 bis 13 oder eine Zusammensetzung nach Anspruch 14 als Kleb- oder Dichtstoff oder als Beschichtungsmittel.

## Claims

1. A method for producing a silylated polyurethane comprising:
(A) reacting
(i) at least one polyol compound with a molecular weight of 4,000-30,000g/mol and at least one compound monofunctional towards isocyanates with
(ii) at least one diisocyanate at a stoichiometric excess of the sum of polyol compound(s) and compound monofunctional towards the diisocyanate compound(s), whereby a polyurethane prepolymer is formed which is hydroxy-terminated; and
(B) reacting the polyurethane prepolymer with one or more isocyanatosilane(s) of formula (I):
OCN-R-Si-(R¹)ₘ(-OR²)₃₋ₘ (I)
in which m is 0, 1 or 2, each R² is an alkyl residue with 1 to 4 carbon atoms, each R¹ is an alkyl residue with 1 to 4 carbon atoms and R is a difunctional organic group,
**characterised in that** the proportion of the compound monofunctional towards isocyanates amounts to 10 to 40 mol% of the mixture of polyol compound(s) and compound monofunctional towards isocyanates.

2. A method according to claim 1, **characterised in that** the compound monofunctional towards isocyanates is selected from monoalcohols, monomercaptans, monoamines or mixtures thereof.

3. A method according to claim 1 or claim 2, **characterised in that** R is a difunctional linear or branched alkyl residue with 1 to 6, in particular 2 to 6, carbon atoms.

4. A method according to at least one of claims 1 to 3, **characterised in that** m is zero.

5. A method according to at least one of claims 1 to 3, **characterised in that** m is one.

6. A method according to at least one of claims 1 to 5, **characterised in that** the proportion of the compound monofunctional towards isocyanates amounts to 15 to 30 mol% of the mixture of polyol compound(s) and compound monofunctional towards isocyanates.

7. A method according to at least one of claims 1 to 6, **characterised in that** the isocyanatosilane of formula (I) is 3-isocyanatopropyltrimethoxysilane or 3-isocyanatopropyltriethoxysilane.

8. A silylated polyurethane produced by a method comprising:
(A) reacting
(i) at least one polyol compound with a molecular weight of 4,000-30,000g/mol and at least one compound monofunctional towards isocyanates with
(ii) at least one diisocyanate at a stoichiometric excess of the sum of polyol compound(s) and compound monofunctional towards the diisocyanate compound(s), whereby a polyurethane prepolymer is formed which is hydroxy-terminated; and
(B) reacting the polyurethane prepolymer with one or more isocyanatosilane(s) of formula (I):
OCN-R-Si-(R¹)ₘ(-OR²)₃₋ₘ (I)
in which m is 0, 1 or 2, each R² is an alkyl residue with 1 to 4 carbon atoms, each R¹ is an alkyl residue with 1 to 4 carbon atoms and R is a difunctional organic group,
**characterised in that** the proportion of the compound monofunctional towards isocyanates amounts to 10 to 40 mol% of the mixture of polyol compound(s) and compound monofunctional towards isocyanates.

9. A silylated polyurethane according to claim 8, **characterised in that** m is zero or one.

10. A silylated polyurethane according to at least one of claims 8 or 9, **characterised in that** R is a difunctional linear or branched alkyl residue with 1 to 6, in particular 2 to 6, carbon atoms.

11. A silylated polyurethane according to at least one of claims 8 to 10, **characterised in that** the compound monofunctional towards isocyanates is selected from monoalcohols, monomercaptans, monoamines or mixtures thereof.

12. A silylated polyurethane according to at least one of claims 8 to 11, **characterised in that** the proportion of the compound monofunctional towards isocyanates amounts to 15 to 30 mol% of the mixture of polyol compound(s) and compound monofunctional towards isocyanates.

13. A silylated polyurethane according to at least one of claims 8 to 12, **characterised in that** the isocyanatosilane of formula (I) is 3-isocyanatopropyltrimethoxysilane or 3-isocyanatopropyltriethoxysilane is and/or the diisocyanate compound is selected from the group consisting of 2,4-toluene diisocyanate, 2,6-toluene diisocyanate, 4,4'-diphenylmethane diisocyanate, 2,4'-diphenylmethane diisocyanate, 1-isocyanato-3,3,5-trimethyl-5-isocyanatomethylcyclohexane (isophorone diisocyanate, IPDI), 4,4'-dicyclohexylmethane diisocyanate isomers, tetramethylxylylene diisocyanate (TMXDI), and mixtures thereof.

14. A silane-crosslinking, curable composition containing at least one silylated polyurethane obtainable by a method according to any one of claims 1 to 7 or at least one silylated polyurethane according to any one of claims 8 to 13.

15. Use of a preparation containing one or more silylated polyurethane(s) which may be produced by a method according to any one of claims 1 to 7 or one or more silylated polyurethane(s) according to at least one of claims 8 to 13 or a composition according to claim 14 as an adhesive or sealant or as a coating composition.

## Revendications

1. Procédé pour la préparation d'un polyuréthane silylé, comprenant
(A) la mise en réaction
(i) d'au moins un composé de polyol possédant un poids moléculaire de 4.000 à 30.000 g/mol et d'au moins un composé monofonctionnel vis-à-vis d'isocyanates avec
(ii) au moins un diisocyanate dans un excès stoechiométrique de la somme du/des composés de polyol(s) et du composé monofonctionnel vis-à-vis du/des composé(s) de diisocyanate(s), pour obtenir un prépolymère de polyuréthane terminé par un ou plusieurs groupes hydroxyle ; et
(B) la mise en réaction du prépolymère de polyuréthane avec un ou plusieurs isocyanatosilanes répondant à la formule (I) :
OCN-R-Si-(R¹)ₘ(-OR²)₃₋ₘ (I)
dans laquelle m est égal à 0, 1 ou 2 ; chaque radical R² représente un résidu alkyle contenant de 1 à 4 atomes de carbone ; chaque radical R¹ représente un résidu alkyle contenant de 1 à 4 atomes de carbone ; et R représente un groupe organique difonctionnel, **caractérisé en ce que** la fraction du composé monofonctionnel vis-à-vis d'isocyanates représente de 10 à 40 mol % du mélange du/des composés de polyol(s) et du composé monofonctionnel vis-à-vis d'isocyanates.

2. Procédé selon la revendication 1, **caractérisé en ce que** le composé monofonctionnel vis-à-vis d'isocyanates est choisi parmi des monoalcools, des monomercaptans, des monoamines, ou leurs mélanges.

3. Procédé selon la revendication 1 ou 2, **caractérisé en ce que** R représente un résidu alkyle difonctionnel à chaîne droite ou ramifiée, contenant de 1 à 6, en particulier de 2 à 6 atomes de carbone.

4. Procédé selon au moins une des revendications 1 à 3, **caractérisé en ce que** m est égal à 0.

5. Procédé selon au moins une des revendications 1 à 3, **caractérisé en ce que** m est égal à 1.

6. Procédé selon au moins une des revendications 1 à 5, **caractérisé en ce que** la fraction du composé monofonctionnel vis-à-vis d'isocyanates représente de 15 à 30 mol % du mélange du/des composés de polyol(s) et du composé monofonctionnel vis-à-vis d'isocyanates.

7. Procédé selon au moins une des revendications 1 à 6, **caractérisé en ce que** l'isocyanatosilane répondant à la formule (I) est le 3-isocyanato-propyltriméthoxysilane ou le 3-isocyanatopropyl-triéthoxysilane.

8. Polyuréthane silylé que l'on prépare via un procédé comprenant :
(A) la mise en réaction
(i) d'au moins un composé de polyol possédant un poids moléculaire de 4.000 à 30.000 g/mol et d'au moins un composé monofonctionnel vis-à-vis d'isocyanates avec
(ii) au moins un diisocyanate dans un excès stoechiométrique de la somme du/des composés de polyol(s) et du composé monofonctionnel vis-à-vis du/des composé(s) de diisocyanate(s), pour obtenir un prépolymère de polyuréthane terminé par un ou plusieurs groupes hydroxyle ; et
(B) la mise en réaction du prépolymère de polyuréthane avec un ou plusieurs isocyanatosilanes répondant à la formule (I) :
OCN-R-Si-(R¹)ₘ(-OR²)₃₋ₘ (I)
dans laquelle m est égal à 0, 1 ou 2 ; chaque radical R² représente un résidu alkyle contenant de 1 à 4 atomes de carbone ; chaque radical R¹ représente un résidu alkyle contenant de 1 à 4 atomes de carbone ; et R représente un groupe organique difonctionnel, **caractérisé en ce que** la fraction du composé monofonctionnel vis-à-vis d'isocyanates représente de 10 à 40 mol % du mélange du/des composés de polyol(s) et du composé monofonctionnel vis-à-vis d'isocyanates.

9. Polyuréthane silylé selon la revendication 8, **caractérisé en ce que** m est égal à 0 ou 1.

10. Polyuréthane silylé selon au moins une des revendications 8 ou 9, **caractérisé en ce que** R représente un résidu alkyle difonctionnel à chaîne droite ou ramifiée contenant de 1 à 6, en particulier de 2 à 6 atomes de carbone.

11. Polyuréthane silylé selon au moins une des revendications 8 à 10, **caractérisé en ce que** le composé monofonctionnel vis-à-vis d'isocyanates est choisi parmi des monoalcools, des monomercaptans, des monoamines ou leurs mélanges.

12. Polyuréthane silylé selon au moins une des revendications 8 à 11, **caractérisé en ce que** la fraction du composé monofonctionnel vis-à-vis d'isocyanates représente de 15 à 30 mol % du mélange du/des composés de polyol(s) et du composé monofonctionnel vis-à-vis d'isocyanates.

13. Polyuréthane silylé selon au moins une des revendications 8 à 12, **caractérisé en ce que** l'isocyanatosilane répondant à la formule (I) est le 3-isocyanato-propyltriméthoxysilane ou le 3-isocyanatopropyl-triéthoxysilane et/ou le composé de diisocyanate est choisi parmi le groupe constitué par le 2,4-toluène-diisocyanate, le 2,6-toluène-diisocyanate, le 4,4'-diphényl-méthanediisocyanate, le 2,4'-diphényl-méthanediisocyanate, le 1-isocyanato-3,3,5-triméthyl-5-isocyanato-méthylcyclohexane (isophoronediisocyanate, IPDI), des isomères du 4,4'-dicyclohexylméthanediisocyanate, le tétraméthylxylylène-diisocyanate (TMXDI) et leurs mélanges.

14. Composition durcissable de réticulation par les silanes contenant au moins un polyuréthane silylé que l'on obtient via un procédé selon l'une quelconque des revendications 1 à 7 ou au moins un polyuréthane silylé selon l'une quelconque des revendications 8 à 13.

15. Utilisation d'une préparation contenant un ou plusieurs polyuréthanes silylés que l'on peut préparer conformément à un procédé selon l'une quelconque des revendications 1 à 7 ou bien un ou plusieurs polyuréthanes silylés selon au moins une des revendications 8 à 13 ou encore une composition selon la revendication 14, à titre d'adhésif ou d'agent d'étanchéité ou à titre d'agent d'enduction.
